Europäisches Patentamt

European Patent Office

Office européen des brevets

(19)

(11) Publication number: **0 013 657**
**B1**

(12) **EUROPEAN PATENT SPECIFICATION**

(45) Date of publication of patent specification: **28.03.84**

(51) Int. Cl.³: **B 23 K 26/00, B 23 K 15/00**

(21) Application number: **80630004.2**

(22) Date of filing: **03.01.80**

(54) Method and apparatus for hole drilling with one or more radiation beams.

(30) Priority: **08.01.79 US 2036**

(43) Date of publication of application:
**23.07.80 Bulletin 80/15**

(45) Publication of the grant of the patent:
**28.03.84 Bulletin 84/13**

(84) Designated Contracting States:
**BE DE FR GB NL**

(56) References cited:
**DE - A - 2 740 755
DE - B - 2 321 137
US - A - 3 649 806
US - A - 4 092 515**

(73) Proprietor: UNITED TECHNOLOGIES
CORPORATION
United Technologies Building 1, Financial Plaza
Hartford, CT 06101 (US)

(72) Inventor: Fribourg, Franklin Henry
4294, Skyline Drive
Jensen Beach, Fl 33547 (US)
Inventor: Van Orden, William Hopkins
13 Riverdale Road
Enfield, CT 06082 (US)

(74) Representative: Waxweiler, Jean et al,
OFFICE DENNEMEYER S.à.r.l. 21-25 Allée
Scheffer P.O.Box 41
L-2010 Luxembourg (LU)

Courier Press, Leamington Spa, England.

Method and apparatus for hole drilling with one or more radiation beams.

This invention relates to hole drilling using radiation beams and a backer, to form uniformly shaped holes.

The use of radiation beams, such as that produced by electron, microwave, or laser beam devices, to rapidly form holes in a workpiece is well known. In carrying out such a process, a stream of electrons, photons, or the like, depending on the type of radiation which is used, is impinged on the surface of a workpiece. The high intensity energy imparted to the entrance surface of the workpiece causes melting and vaporization. A cavity is quickly formed in the workpiece, often by repetitive pulsing of the beam radiation.

Backers are articles placed at the exit side of the workpiece in order prevent the radiation beam from further penetrating another element of the workpiece when one is present, and to aid in the formation of a uniformly shaped hole free of burrs and other defects. Inasmuch as electron beam drilling processes have been longer in use, compared to laser beam drilling processes, the technology for backers has been accordingly developed mostly for electron beam drilling. As described in Konig, US—A—3,649,806, a function of a backer in electron beam drilling is to supply a volatilizing medium which, through the generation of gases within the backer, causes an improved quality hole to be created. The backers known in the art for electron beam drilling are, on the whole, usable for laser beam drilling, as they are suited to absorbing the incident radiation within both spectral ranges and generating appropriate gases which aid hole formation.

Interest is high in radiation beam hole drilling because of the high production rates that these processes are capable of, particularly in hard to machine materials. To maximize the economic advantage, it is desirable to expend the minimum amount of radiation time and energy necessary in drilling a hole. That is, it is undesirable to maintain the input of radiation after the hole has penetrated the exit side of the workpiece and a uniform shape achieved since time and energy are wasted. For workpieces of uniform thickness, and composition, this necessitates adjusting the time and intensity of radiation to certain predetermined fixed conditions. But, if the thickness of a workpiece varies within a fairly substantial manufacturing tolerance, such as is encountered on cast components, then the energy-time conditions have to be set for the maximum thickness anticipated to ensure all holes are drilled. As a consequence, inefficiency of equipment productivity results when there are substantial portions of the workpiece thinner than the maximum encountered section. Furthermore, backers may have to be thicker to ensure they are not penetrated at the thinner locations where the beam will unnecessarily penetrate into the backer. Similar difficulties will arise when the composition of workpiece varies from point to point, or the angle of the workpiece to the beam axis varies the effective thickness of drilling. Of course, if the aforementioned variations are known or determinable, and a beam programming capability is introduced, the variations can be accommodated efficiently. But there is a substantial cost involved in doing this, and a simple way of controlling beam penetration into the backer with varying thickness workpieces is most desirable.

To improve efficiency of drilling equipment US—A—3649806 discloses a process and apparatus for extracting material by means of an energy beam, including bores, according to which marks made on the lower surface of a support for the workpiece at the locations where the beam should work control the turning on of the beam. The spaces between the marks do not turn on the beam when they are scanned by means of a feeler. The support serves as a backer to enable holes of high accuracy to be drilled. For the safe operation of laser devices working materials DE—B—2321137 shows the use of a drilling beam and an indicator beam. The indicator beam is reflected by the workpiece and the purpose of the indicator beam is to avoid that the laser beam is turned on when no workpiece is in front of the laser beam exit.

An object of the invention is to provide an improved method and apparatus for drilling with radiation beams to improve the efficiency of drilling well-formed holes in a workpiece.

According to the invention this object is realized by means of a method as claimed in claim 1 and an apparatus as claimed in claim 4.

In a preferred embodiment, when a laser drilling beam penetrates through a workpiece and into a backer, there is transmission by the backer of a portion of that laser radiation passed through the drilled hole; a fiber optic receptor in contact with a free surface of the backer receives and guides radiation to a photovoltaic detector which is coupled to a controller; and, the drilling action is then controllably terminated as a function of the radiation sensed at the detector. In a further refinement, a continuous indicator laser beam is coextensive with a pulsed drilling laser beam and the backer preferentially transmits at the indicator beam wavelength. A backer in accord with the invention by virtue of intimate contact with the workpiece and the evolution of gases upon action of the beam can desirably aid in the formation of a symmetrical hole substantially free of burrs.

In a preferred practice of the invention, a neodynium laser drilling beam is used in conjunction with a helium neon laser indicator beam, and the epoxy resin backer and photomultiplier detector are respectively transmissive to and sensitive to radiation from the indicator beam when it passes through the hole caused by the drilling beam.

The invention provides for increased speed and precision in drilling a multiplicity of holes in a workpiece with a varying effective thickness, ensuring that excess energy is not imparted to thinner sections and sufficient energy is provided to thicker sections, to efficiently produce fully formed holes throughout. Another feature of the invention is that backers may be made thinner and therefore lower in cost, since there is less chance of inadvertent penetration of the backer through undue perpetuation of a drilling function. These and other aspects and features of the invention will become apparent from the preferred embodiment.

The preferred embodiment is described in terms of drilling a casting, such as a superalloy, with radiation from a laser, but the invention is applicable to other material forms and other types of radiation beams. As used herein, the term radiation beam is synonymous with the term energy beam used in some of the prior art, both terms designating energy transmission within the spectrum of electromagnetic phenomena.

The laser method of hole drilling of metals is well described in the prior art. A particular improved method with which the instant invention may be usable, is described in Joslin et al., US—A—4,092,515, which is hereby incorporated by reference.

A workpiece to which the preferred embodiment of the invention is particularly suited is a cobalt base superalloy having a thickness of about 5 mm in which 0.4 to 0.6 mm diameter holes of different inclination are to be drilled. The effective thickness, or the length of the holes, varies from about 5 to 17 mm. A neodymium laser is configured to drill a hole by application of pulsed radiation at 1.06 micron wavelength to the workpiece entrance surface of an intensity of about $10^7$ watts per sq. cm, a pulse duration of about 650 microseconds, and a pulse rate of about 0.3 to 1 pulses per second. Coaligned in a conventional manner with the neodymium laser is a helium neon indicator laser, configured to operate continuously at 0.63 micron wavelength.

The workpiece has a backer applied in intimate contact to the exit surface. A preferred backer for practice of the invention is comprised of a material and structure which has the capability of transmitting radiation of a wavelength of a laser beam passing through the hole. An exemplary material meeting this criterion for the 0.63 micron wavelength is the epoxy resin combination known as Epon 815 and Hardener V-40, both of the Shell Oil Company Chemical Division, Houston, Texas. The backer is applied conventionally to the exit surface of the workpiece to a thickness of about 4 mm, in a manner known in the art. After hardening and curing for about 24 hours the assembly is put in the drilling machine.

In proximity to a free surface of the backer the end of a glass fiber optic guide is disposed so that it can act as a receptor of any radiation transmitted from the backer. The guide is coupled at its other end with a detector. The detector is a photoemissive cell, such as a photomultiplier. It is desirably used to transduce the incident laser radiation into an electric signal. The electrical output of the detector will be proportionate to the incident radiation and is suitably converted to control the drilling neodymium laser.

To practice the invention in the preferred mode, both lasers are activated and drilling of the workpiece commenced, usually in a shielded environment. When the workpiece is penetrated after a number of pulses of the neodymium laser operating in the aforementioned mode, radiation from both the neodymium and the continuously-on helium neon laser are impinged on the backer. The backer resists penetration of the drilling beam, and scatters and absorbs drilling beam radiation while vaporizing and evolving gases. The backer transmits part of the radiation from the indicator beam through its structure to the fiber optic receptor. Radiation from the drilling beam is also transmitted, but with much greater absorption and attenuation. The detector is configured to be especially sensitive to the indicator beam wavelength. When radiation above a preset threshold level, typically the background level, is detected, the action of the drilling beam is controllably terminated, usually after a few additional pulses to shape the hole fully. Thus, the duration of the drilling beam operation is directly tied to the effective thickness of the workpiece. After drilling is completed the workpiece is taken from the drilling machine and the backer is removed by disintegration through heating at 550°C in air for 1 hour or more. Other modes of removal could be used.

As a further example, a 10 cm long hollow tube with a 4 x 10 mm nominal oval cross section, made of about 1 mm thick nickel superalloy sheet is to be drilled with a multiplicity of holes. The tube is filled with the aforementioned Epon epoxy resin combination which is then cured. A fiber optic receptor is configured with a detector and controller, as in the prior example, where the epoxy resin is exposed. The laser drilling is commenced and when radiation is detected in the backer, beam energy is controllably terminated, and a new hole commenced. After drilling is completed, the tube is slowly and controllably heated to oxidize the backer and any residue is removed by conventional cleaning processes.

A number of alternate embodiments are useful. Of course, as indicated, other radiation than that from a laser may be used either for drilling or indicator purposes. Backers which are suitably transmissive of drilling beam radiation wavelength will, of course, not require the use of a separate wavelength indicator beam. But, to practice the invention, it is necessary that the workpiece be relatively opaque or non-transmissive of at least one wavelength impinged on the workpiece and passed through the hole coincident with the drilling beam radiation. Further, although we have described our preferred embodiment in terms of coherent radiation, with the drilling beam operating in the pulsed mode, these constraints are not necessary to practice the invention. Incoherent radiation or continuous mode operation of the source may be suitable for particular workpieces.

To enable practice of the invention, the backer at a minimum, must be capable of transmitting radiation through its thickness. This is so because with a backer having a minimum impenetrable thickness, the closest the detector could feasibly be located is at the free surface directly along the beam axis. The transmitted radiation must be sufficient for a detector to reliably distinguish the radiation from whatever background radiation is incident on the detector. It is difficult to quantify the minimum acceptable transmittance. An acceptable backer will communicate radiation from its point of impingement, through the backer thickness, to a sensitive receptor/detector located in closest proximity to the point of impingement. The closest proximity is the thickness, unless the receptor is embedded in the backer. Of course, the necessary thickness of a backer is a function of the workpiece thickness, the beam intensity, and the hole diameter. Backers as thin as about 0.5 mm and as thick as about 10 mm are usable.

Most desirably, the receptor will be located at a point remote from the axis of the beam, as this will not require the receptor to be moved synchronously with the beam to receive the signal, and in such an instance the backer will need greater transmittance. Of course, the transmittance of the backer will vary with the composition of the backer and the wavelength of the radiation being impinged. The backer need not have perfect transmissibility of the radiation which is to be detected, as a degree of attenuation is permissible. For laser radiation in the 0.63 micron wavelength, the aforementioned Epon has sufficient transmittance for all practical applications of interest to date. It would appear that there will be other similar polymeric backers which would be suitable. It is, of course, acceptable to have diffusion or scattering of radiation within the backer so long as it is of an intensity which is detectable at the receptor point. As practiced in our preferred mode with a 0.63 micron wavelength indicator laser, we feel the minimum transmittance of an acceptable backer will be such that 10 percent of the radiation is detectable a distance of 5 cm from the hole.

We have predominantly used a relatively clear, e.g., unfilled resin. (Epon 815 has a brownish tone which is acceptable.) The inclusion of 50% weight of filler such as soda lime glass is detrimental to the functioning of the backer with the aforementioned lasers, particularly when the receptor is located a few centimeters distant from the hole. We speculate this is due to the multiplicity of refractive interfaces presented by the particulate, since we believe a backer of the glass alone would function adequately. A filler which does not have a dissimilar index of refraction to the matrix or binder is believed to be a suitable binder. But of course, a filler which was absorptive of all the beam radiation wavelengths would be unsuitable if present in any appreciable quantity. Of course, other factors will constrain the choice of backer, such as ease of application and removal, effectiveness in resisting the penetration of a beam, cost, and so forth.

It may occur that a backer meeting the foregoing criteria does not have a suitable refractive index with air to transmit radiation along the plane of the workpiece when it is desirable to have the receptor located at a laterally displaced point. In such circumstance, a coating or surface layer could be contacted with the free surface of the backer to either change the refractive index of the interface or otherwise provide a reflective surface. Similarly it may be desired to have a multi-layer backer. As an example: providing a first layer in intimate contact with the workpiece, the layer having high beam penetration resistance, and a second highly transmissive but less resistive layer upon the first layer. In such embodiment, the second layer would in essence function as the receptor of the preferred embodiment.

Variations are possible in the receptor, detector, and conroller. It is preferred that the receptor be readily disconnectable from the backer, to permit its use on a multiplicity of parts. However, the receptor may be molded within the body of a backer when it is formed if this is desired, in which case the receptor location would be assured and the radiation detected would be that within the backer, rather than that which is emitted across an air gap between the receptor and the backer surface. Further, it may be desirable in certain instances to use more than one receptor either in serial or parallel arrangement, to ensure the receipt of an adequate signal when holes at diverse locations are being drilled.

In the above described apparatus the detector was a photomultiplier device. Other transducers which perceive at least one wavelength of the radiation of a beam passing through the hole are usable. In addition, while the preferred practice of the invention entails a separation between the receptor and the detector, the receptor with guide is not a necessary element inasmuch as the detector may be directed located at or within the backer in particular configurations.

When the radiation is detected within the backer, penetration of the workpiece is indicated and the drilling beam output may be altered. Experience with the apparatus and material will indicate the control mode necessary to generate the desired hole shape. Optional control modes may be immediate or delayed termination or modulation.

Although the invention has been shown and described with respect to preferred embodiments thereof, it should be understood by those skilled in the art that various changes and omissions in the form and detail thereof may be made therein without departing from the scope of the attached claims.

## Claims

1. A method for drilling, with one or more radiation beams, a hole in a workpiece having an entrance surface and exit surface, where the workpiece is substantially non-transmissive of the radiation from the beams, comprising the steps of:
impinging a drilling radiation beam of the entrance surface in sufficient intensity to penetrate the workpiece and drill a hole which penetrates the exit surface, and
placing a backer in intimate contact with the exit surface of the workpiece, in a thickness sufficient to resist penetration by a beam of intensity and duration to provide a uniform shaped hole free of burrs at the exit surface in the workpiece, characterized in that the backer is substantially transmissive of a portion of the beam radiation, and transmits a portion of radiation impinged thereon, and by the steps of detecting the radiation passing through the hole and transmitted within the backer with a detector located apart from the point at which radiation is impinged on the backer, and
controlling the intensity of the drilling radiation beam as a function of the radiation detected with the detector.

2. The method of claim 1, characterized in that there are two radiation beams comprising a drilling beam which provides energy for penetration, and an indicator beam which provides radiation for detecting and controlling.

3. The method of claim 1 to 2, characterized in that said radiation beams are laser beams.

4. An apparatus for carrying out the method according to any one of the claims 1 to 3, comprising a source with an output radiation beam of sufficient intensity to drill a hole in the workpiece, the radiation wavelength being such that it is not substantially transmittable through the workpiece, characterized by,
a backer configured to the contour of the exit surface of the workpiece and capable of intimate contact thereto, the backer further being capable of transmitting radiation of the beam and resisting penetration by the beam, a detector, located in proximity to the exit surface of the workpiece, for sensing radiation from the source which passes through a hole created by the action of the beam and which passes through the backer, and means for controlling the source output as a function of the radiation intensity sensed by the detector.

5. The apparatus of claim 4, characterized in that said source comprises a first source with an output radiation beam of sufficient intensity to drill a hole in the workpiece, and a second source with an output radiation beam essentially coaligned with the beam of the first source in a manner which is adapted to indicate penetration of the workpiece by a hole formed by the first source beam, the radiation wavelength being such that it is not substantially transmittable through the workpiece, and that said detector senses radiation which penetrates through the exit surface of the workpiece at the wavelength of the beam from the second source.

6. The apparatus of claim 4 or 5, characterized in that the source is a laser and the detector is a photodetector.

## Revendications

1. Procédé pour forer, à l'aide d'un ou plusieurs faisceaux de radiation, un trou dans une pièce à usiner ayant une surface d'entrée et une surface de sortie, la pièce à usiner étant substantiellement opaque à la radiation des faisceaux, comprenant les étapes de: faire tomber un faisceau de radiation forant sur la surface d'entrée avec une intensité suffisante pour pénétrer la pièce à usiner et forer un trou, qui perce la surface de sortie et placer un support en contact intime avec la surface de sortie de la pièce à usiner, avec une épaisseur suffisante pour résister à la pénétration par le faisceau d'intensité et de durée qui permettent un trou de forme uniforme sans ébarbure à la surface de sortie de la pièce à usiner, caractérisé en ce que le support est substantiellement transparent à une partie de la radiation du faisceau et transmet une partie de la radiation qui tombe sur lui et par les étapes de détecter la radiation passant par le trou, et transmise par le support, avec un détecteur placé à part du point auquel la radiation tombe sur le support et de commander l'intensité du faisceau de radiation forant en fonction de la radiation détectée par le détecteur.

2. Procédé selon la revendication 1, caractérisé en ce qu'il y a deux faisceaux de radiation comprenant un faisceau de forage qui fournit l'énergie pour la pénétration et un faisceau indicateur qui fournit l'énergie pour la détection et la commande.

3. Méthode selon la revendication 1 ou 2, caractérisé en ce que les dits faisceaux de radiation sont des faisceaux laser.

4. Appareil pour la mise en oeuvre du procédé selon l'une quelconque des revendications 1 à 3, comprenant une source à faisceau de radiation de sortie d'une intensité suffisante pour forer un trou dans une pièce à usiner, la longueur d'onde de la radiation étant telle qu'elle ne peut substantiellement pas être transmise par la pièce à usiner, caractérisé par un support formé de sorte à suivre le contour de la surface de sortie de la pièce à usiner et capable d'un contact intime avec celle-ci, le support étant en outre capable de transmettre la radiation du faisceau et de résister à la pénétration par le faisceau, un détecteur placé en proximité de la surface de sortie de la pièce à usiner pour détecter la radiation de la source qui passe à travers le trou créé par l'action du faisceau et qui passe par le support, et un moyen de commande de la sortie de la source en fonction de l'intensité de la radiation mesurée par le détecteur.

5. Appareil selon la revendication 4, caractérisé en ce que la source comprend une première source avec un faisceau de radiation de sortie d'une intensité suffisante pour forer un trou dans la pièce à usiner et une seconde source avec un faisceau d'énergie de sortie essentiellement aligné sur une ligne avec le faisceau de la première source d'une manière telle qu'il est approprié pour indiquer la pénétration de la pièce à usiner par un trou formé par le premier faisceau, la longueur d'onde de la radiation étant telle qu'elle n'est substantiellement pas transmise par la pièce à usiner, et en ce que le détecteur mesure la radiation qui pénètre par la surface de sortie de la pièce à usiner à la longueur d'onde du faisceau de la seconde source.

6. Appareil selon la revendication 4 ou 5 caractérisé en ce que la source est un laser et que le détecteur est un photodétecteur.

## Patentansprüche

1. Verfahren zum Bohren, mit einem oder mehreren Energiestrahlen, eines Loches in einem Werstück mit einer Eingangsoberfläche und einer Ausgangsoberfläche, wobei das Werkstück im wesentlichen nicht durchlässig für die Strahlung der Stahlen ist, mit den Verfahrenschritten: Richten eines Energiestrahles auf die Eingangsoberfläche mit einer Intensität, die ausreicht, um das Werkzeug zu durchdringen und ein Loch zu bohren, welches an der Austrittsoberfläche herauskommt, und Anordnen einer Unterlage in engem Kontakt mit der Austrittsoberfläche des Werkstückes, mit einer Dicke, die ausreicht, um der Durchdringung durch einen Strahl zu widerstehen, der eine Intensität und Dauer hat, die ausreicht ein gleichförmig geformtes Loch ohne Grate an der Austrittsoberfläche im Werkstück zu bilden, dadurch gekennzeichnet, dass die Unterlage im wesentlichen für einen Teil der Strahlstrahlung durchlässig ist und einen Teil der darauf auftreffenden Strahlung durchlässt und durch die Verfahrensschritte des Feststellens der durch das Loch hindurchgehenden und in der Unterlage weitergeleiteten Strahlung mit einen getrennt von dem Punkt, auf den die Strahlung auf die Unterlage auftrifft, angeordneten Detektor und Steuern der Intensität des bohrenden Energiestrahles als Funktion der mit dem Detektor festgestellten Strahlung.

2. Verfahren nach Anspruch 1, dadurch gekennzeichnet, dass zwei Energiestrahlen vorhanden sind, ein Bohrstrahl, welcher die Energie für die Durchdringung bereitstellt und ein Anzeigestrahl, welcher die Energie für die Feststellung und Steuerung bereitstellt.

3. Verfahren nach Anspruch 1 oder 2, dadurch gekennzeichnet, dass die Energiestrahlen Laserstrahlen sind.

4. Vorrichtung zur Durchführung des Verfahrens nach einem der Ansprüche 1 bis 3, mit einer Quelle mit einem Ausgangsenergiestrahl mit einer Intensität, die ausreicht um ein Loch in das Werkstück zu bohren, wobei die Strahlungswellenlänge derart ist, dass sie im wesentlichen nicht durch das Werkstück hindurch geleitet wird, gekennzeichnet durch eine Unterlage, welche so geformt ist, dass sie dem Umriss der Austrittsoberfläche des Werkstückes folgt und mit dieser in engen Kontakt treten kann, wobei die Unterlage desweitern Strahlung des Strahles weiterleiten und der Durchdringung durch den Strahl widerstehen kann, einen Detektor, welcher nahe an der Austrittsoberfläche des Werkstückes angeordnet ist, um die Strahlung von der Quelle zu messen, welche durch das durch die Wirkung des Strahles geschaffene Loch hindurchgeht, und welche durch die Unterlage hindurchtritt, und Mittel zur Steuerung des Quellenausgangs als eine Funktion des Strahlungsintensität, welche vom Detektor gemessen wird.

5. Vorrichtung nach Anspruch 4, dadurch gekennzeichnet, dass die Quelle eine erste Quelle umfasst, mit einem Ausgangsstrahlungsstrahl mit einer Intensität, die ausreicht um ein Loch in dem Werkstück zu bohren, und einer zweiten Quelle mit einem Ausgangsstrahlungsstrahl, welcher mit dem Strahl der ersten Quelle im wesentlichen eine Linie bildet in solcher Weise, die dazu angetan ist die Durchdringung des Werkstücks durch ein vom ersten Quellenstrahl gebildete Loch anzuzeigen, wobei die Strahlungswellenlänge derart ist, dass sie im wesentlichen nicht durch das Werkstück geleitet wird, und dass der Detektor Strahlung misst, welche durch die Austrittsoberfläche des Werkstücks hindurchtritt, bei der Wellenlänge des Strahles von der zweiten Quelle.

6. Vorrichtung nach Anspruch 4 oder 5, dadurch gekennzeichnet, dass die Quelle ein Laser und der Detektor ein Photodetektor sind.